# EUROPÄISCHE PATENTSCHRIFT

(11) **EP 3 502 187 B1**
(45) Veröffentlichungstag und Bekanntmachung des Hinweises auf die Patenterteilung: **05.10.2022**
(21) Anmeldenummer: 17210006.7
(22) Anmeldetag: 22.12.2017
(51) Int. Cl.: C08L 77/06, B32B 27/08

(54) **SCHLAGZÄHMODIFIZIERTE POLYAMID-FORMMASSEN**
TOUGHENED POLYAMIDE MOULDING MASSES
SUBSTANCES DE FORMAGE EN POLYAMIDE À RÉSILIENCE MODIFIÉE

(43) Veröffentlichungstag der Anmeldung: 26.06.2019
(73) Patentinhaber: EMS-CHEMIE AG, 7013 Domat/Ems (CH)
(72) Erfinder: Stöppelmann, Georg, 7402 Bonaduz (CH)
(74) Vertreter: Pfenning, Meinig & Partner mbB

(56) Entgegenhaltungen:
- US-A1- 2013 053 500
- US-A1- 2014 065 338
- US-A1- 2014 066 568
- US-A1- 2017 037 198

## Beschreibung

Die vorliegende Erfindung betrifft schlagzähmodifizierte Polyamid-Formmassen gemäß Anspruch 1.

Weiterhin betrifft die vorliegende Erfindung Formkörper aus diesen Polyamid-Formmassen, bevorzugte Formkörper sind dabei durch Extrusion geformte Leitungen und Behälter.

Schlagzähmodifizierte Polyamid-Formmassen und Formkörper daraus sind bereits im Stand der Technik beschrieben.

EP 2 366 539 A1 betrifft ein zweilagiges Kunststoff-Leitungsstück für druckbeaufschlagte Flüssigkeitsleitungen mit einer Innenschicht und mit einer Außenschicht. Die Innenschicht ist aus einer ersten Mischung aufgebaut, welche ein elastomeres Copolyolefin oder einen Blend aus einem teilkristallinen Polyolefin und einem synthetischen olefinischen Kautschuk, sowie ein Homopolyamid umfasst. Die Außenschicht ist aus einer zweiten Mischung aufgebaut, welche ein Homopolyamid umfasst. Derartige Leitungen bzw. Rohre finden unter anderem in der Industrie und beim Automobilbau Anwendung, bevorzugt sind dabei Kühlleitungen für Automobile.

EP 3 135 731 A1 betrifft eine Polyamid-Formmasse bestehend aus einem amorphen, mikrokristallinen oder teilkristallinen Polyamid oder Mischungen hiervon, mindestens einem Schlagzähmodifikator, Hohlglaskugeln sowie weiteren Zusatzstoffen.

Ausgehend davon bestand die Aufgabe eine Polyamid-Formmasse bereitzustellen, die eine sehr gute Zähigkeit aufweist, insbesondere ausgedrückt durch die Kerbschlagzähigkeit bei Raumtemperatur und bei tiefer Temperatur sowie die Reißdehnung und die darüber hinaus auch extrudierbar ist, wobei die extrudierten Formkörper eine glatte Oberfläche aufweisen.

Diese Aufgabe wird durch die Polyamid-Formmasse gemäß Anspruch 1 gelöst.

Bevorzugte Ausführungsformen der erfindungsgemäßen Polyamid-Formmasse werden in den abhängigen Ansprüchen 2 bis 14 angegeben.

Weiterhin betrifft die vorliegende Erfindung die Formkörper gemäß Anspruch 15, bevorzugte Formkörper werden in Anspruch 16 angegeben.

### Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet.

### Allgemeines zu Mengenangaben

Die Polyamid-Formmassen gemäß der vorliegenden Erfindung enthalten die Komponenten (A) bis (D) oder bestehen bevorzugt ausschließlich aus diesen, es gilt dabei die Maßgabe, dass sich die Komponenten (A), (B), (C) und (D) in Summe auf 100 Gew.-% ergänzen. Die festgelegten Bereiche der Mengenangaben für die einzelnen Komponenten (A), (B), (C) und (D) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (D) 100 Gew.-% ergibt.

### Funktionalisierung von Komponente (C)

Komponente (C) kann durch Copolymerisation oder durch Pfropfen funktionalisiert werden. Im Sinne der vorliegenden Erfindung meint Funktionalisieren durch Copolymerisation den Einbau der funktionalisierenden Verbindung in die Hauptkette von Komponente (C) als Bestandteil dieser Hauptkette. Unter der Funktionalisierung von Komponente (C) durch Pfropfen wird hingegen das Anbinden der funktionalisierenden Verbindung an die Hauptkette verstanden, so dass Seitenketten entstehen.

### Teilkristalline Polyamide

Im Sinne der vorliegenden Erfindung sind teilkristalline Polyamide solche Polyamide, die einen Schmelzpunkt besitzen. Weiterhin weisen im Sinne der vorliegenden Erfindung teilkristalline Polyamide bevorzugt in der dynamischen Differenz-Kalorimetrie (engl. Differential Scanning Calorimetry, DSC) nach ISO 11357-3 (2013) bei einer Aufheizrate von 20 K/min eine Schmelzwärme von mehr als 4 J/g auf.

### Polyamid-Formmasse

Die erfindungsgemäße Polyamid-Formmasse enthält die Komponenten (A) bis (D) oder besteht aus diesen. Der Anteil von Komponente (A) in der Polyamid-Formmasse liegt erfindungsgemäß im Bereich von 55 bis 88,9 Gew.-%, bevorzugt von 58 bis 83,7 Gew.-% und besonders bevorzugt von 60 bis 79,5 Gew.%, bezogen auf das Gesamtgewicht der Polyamid-Formmasse.

Der Anteil von Komponente (B) in der Polyamid-Formmasse liegt erfindungsgemäß im Bereich von 5 bis 25 Gew.-%, bevorzugt von 8 bis 20 Gew.-% und besonders bevorzugt von 10 bis 20 Gew.-%, bezogen auf das Gesamtgewicht der Polyamid-Formmasse.

Der Anteil von Komponente (C) in der Polyamid-Formmasse liegt erfindungsgemäß im Bereich von 6 bis 22 Gew.-%, bevorzugt von 8 bis 20 Gew.-% und besonders bevorzugt von 10 bis 20 Gew.-% bezogen auf das Gesamtgewicht der Polyamid-Formmasse.

Der Anteil von Komponente (D) in der Polyamid-Formmasse liegt erfindungsgemäß im Bereich von 0,1 bis 10 Gew.-%, bevorzugt von 0,3 bis 6 Gew.-% und besonders bevorzugt von 0,5 bis 4 Gew.-% bezogen auf das Gesamtgewicht der Polyamid-Formmasse.

Der Anteil von Komponente (A) in der Polyamid-Formmasse liegt erfindungsgemäß im Bereich von 55 bis 88,9 Gew.-%, bevorzugt von 58 bis 83,7 Gew.-% und besonders bevorzugt von 60 bis 79,5 Gew.% und der Anteil von Komponente (B) in der Polyamid-Formmasse im Bereich von 5 bis 25 Gew.-%, bevorzugt von 8 bis 20 Gew.-% und besonders bevorzugt von 10 bis 20 Gew.-% und der Anteil von Komponente (C) in der Polyamid-Formmasse im Bereich von 6 bis 22 Gew.-%, bevorzugt von 8 bis 20 Gew.-% und besonders bevorzugt von 10 bis 20 Gew.-% und der Anteil von Komponente (D) in der Polyamid-Formmasse im Bereich von 0,1 bis 10 Gew.-%, bevorzugt von 0,3 bis 6 Gew.-% und besonders bevorzugt von 0,5 bis 4 Gew.-%, jeweils bezogen auf das Gesamtgewicht der Polyamid-Formmasse.

Gemäß einer bevorzugten Ausführungsform der vorliegenden Erfindung weist ein Prüfkörper aus der erfindungsgemäßen Polyamid-Formmasse
- eine Reißdehnung bestimmt nach ISO 527 von mindestens 200 %, bevorzugt mindestens 220 % und besonders bevorzugt mindestens 250 % auf; und/oder
- einen Zug-E-Modul bestimmt nach ISO 527 von mindestens 900 MPa, bevorzugt mindestens 1000 MPa und besonders bevorzugt mindestens 1100 MPa auf; und/oder
- eine Charpy-Kerbschlagzähigkeit bei 23°C bestimmt nach ISO 179/2eA von mindestens 75 kJ/m², bevorzugt mindestens 80 kJ/m² und besonders bevorzugt mindestens 90 kJ/m² auf; und/oder
- eine Charpy-Kerbschlagzähigkeit bei -40°C bestimmt nach ISO 179/2eA von mindestens 15 kJ/m², bevorzugt mindestens 20 kJ/m² und besonders bevorzugt mindestens 21 kJ/m² auf.

Eine andere bevorzugte Ausführungsform vorliegender Erfindung sieht vor, dass der nach ISO 1133-1 (2012) bestimmte MVR (melt volume rate) der Schmelze im Bereich von 10 bis 120 cm³/10 min, bevorzugt von 15 bis 100 cm³/10 min und besonders bevorzugt von 20 bis 90 cm³/10 min liegt.

Eine weitere bevorzugte Ausführungsform vorliegender Erfindung sieht vor, dass die wie im experimentellen Teil angegeben bestimmte Schmelzefestigkeit im Bereich von 15 bis 60 Sekunden und bevorzugt von 18 bis 55 Sekunden liegt.

Sofern die Voraussetzungen gemäß der beiden vorhergehenden Ausführungsformen erfüllt sind, ist die Polyamid-Formmasse extrudierbar.

Gemäß einer bevorzugten Ausführungsform der vorliegenden Erfindung enthält die Polyamid-Formmasse
- PA 616 als Komponente (A);
- ein Polyamid ausgewählt aus der Gruppe bestehend aus PA 12, PA 616, PA 1016 und Mischungen davon als Komponente (B); und
- einen funktionalisierten Schlagzähmodifikator ausgewählt aus der Gruppe bestehend aus Ethylen-Propylen-Copolymeren, Ethylen-1-Buten-Copolymeren, Ethylen-Propylen-1-Buten-Copolymeren, Stryol-Copolymeren, Styrol-Blockcopolymeren und Mischungen davon als Komponente (B).

Nach einer weiteren bevorzugten Ausführungsform der vorliegenden Erfindung enthält die Polyamid-Formmasse
- PA 616 als Komponente (A);
- ein Polyamid ausgewählt aus der Gruppe bestehend aus PA 12, PA 616, PA 1016 und Mischungen davon als Komponente (B); und
- einen funktionalisierten Schlagzähmodifikator ausgewählt aus der Gruppe bestehend aus Ethylen-Propylen-Copolymeren, Ethylen-1-Buten-Copolymeren, Styrol-Blockcopolymeren und Mischungen davon als Komponente (C).

Gemäß einer anderen bevorzugten Ausführungsform der vorliegenden Erfindung enthält die Polyamid-Formmasse
- PA 616 als Komponente (A);
- mindestens zwei Polyamide ausgewählt aus der Gruppe bestehend aus PA 12, PA 616 und PA 1016 davon als Komponente (B); und
- einen funktionalisierten Schlagzähmodifikator ausgewählt aus der Gruppe bestehend aus Ethylen-Propylen-Copolymeren, Ethylen-1-Buten-Copolymeren, Ethylen-Propylen-1-Buten-Copolymeren, Stryol-Copolymeren, Styrol-Blockcopolymeren und Mischungen als Komponente (C).

Eine andere bevorzugte Ausführungsform sieht vor, dass Komponente (A) und Komponente (B) PA 616 sind.

Gemäß einer weiteren bevorzugten Ausführungsform vorliegender Erfindung ist Komponente (A) PA 616 und Komponente (B) PA 1016.

Nach einer weiteren bevorzugten Ausführungsform vorliegender Erfindung ist Komponente (A) PA 616 und Komponente (B) PA 12.

Eine andere bevorzugte Ausführungsform sieht vor, dass Komponente (A) PA 616 ist und die Komponenten (B) PA 616 und PA 12 ist.

Gemäß einer weiteren bevorzugten Ausführungsform vorliegender Erfindung sind Komponente (A) und Komponente (B) jeweils PA 1016.

Nach einer weiteren bevorzugten Ausführungsform vorliegender Erfindung ist Komponente (A) PA 1016 und Komponente (B) PA 616.

Eine andere bevorzugte Ausführungsform sieht vor, dass Komponente (A) und Komponente (B) jeweils PA 616 ist und Komponente (C) ausgewählt ist aus der Gruppe bestehend aus Ethylen-Propylen-Copolymeren, Ethylen-1-Buten-Copolymeren oder Ethylen-Propylen-l-Buten-Copolymeren und Mischungen davon.

Gemäß einer weiteren bevorzugten Ausführungsform vorliegender Erfindung sind Komponente (A) PA 616 und Komponente (B) PA 616 und PA 12, und Komponente (C) ist ausgewählt aus der Gruppe bestehend aus Ethylen-Propylen-Copolymernen, Ethylen-1-Buten-Copolymeren, Ethylen-Propylen-1-Buten-Copolymeren und Mischungen davon.

Nach einer weiteren bevorzugten Ausführungsform vorliegender Erfindung sind Komponente (A) und Komponente (B) PA 616 und Komponente (C) ist ein Stryol-Copolymer oder Styrol-Blockcopolymer.

Eine andere bevorzugte Ausführungsform sieht vor, dass Komponente (A) PA 616 und Komponente (B) PA 1016 ist und Komponente (C) ausgewählt ist aus der Gruppe bestehend aus Ethylen-Propylen-Copolymeren, Ethylen-1-Buten-Copolymeren, Ethylen-Propylen-1-Buten-Copolymeren und Mischungen davon.

Gemäß einer weiteren bevorzugten Ausführungsform ist das Gewichtsverhältnis von Komponente (A) zu Komponente (B) im Bereich von 95 : 5 bis 60 : 40, bevorzugt von 85 : 15 bis 70 : 30 und besonders bevorzugt von 80 : 20 bis 72 : 28, jeweils bezogen auf 100 Gewichtsteile als Summe aus (A) und (B).

Gemäß einer bevorzugten Ausführungsform enthält die Formmasse genau ein Polyamid (A) und genau ein Polyamid (B).

Im Folgenden werden bevorzugte Ausführungsformen für die Komponenten (A) bis (D) angegeben.

### Komponente (A)

Die Komponente (A) weist eine relative Viskosität im Bereich von 1,8 bis 2,5, bevorzugt von 1,90 bis 2,30 und besonders bevorzugt 1,95 bis 2,25 auf. Die relative Viskosität wird dabei bei 20°C gemessen nach ISO 307 (2007) in einer Lösung von 0,5 g Polymer in 100 ml m-Kresol.

Nach einer weiteren bevorzugten Ausführungsform liegt der Gehalt der Aminoendgruppen von Komponente (A) im Bereich von 25 bis 100 mmol/kg, bevorzugt von 30 bis 95 und besonders bevorzugt von 40 bis 90 mmol/kg.

Eine andere bevorzugte Ausführungsform sieht vor, dass der Gehalt der Aminoendgruppen von Komponente (A) höher ist als der Gehalt Carboxylendgruppen dieser Komponente. Insbesondere bevorzugt liegen die Aminoendgruppen in einem Überschuss von mindestens 15 %, bevorzugt von mindestens 20 % und besonders bevorzugt von mindestens 25 % vor.

Liegt die Komponente (A) in Form einer Mischung aus mehreren Bestandteilen vor, so gilt das Merkmal des Aminoendgruppenüberschusses für die Endgruppen der gesamten Mischung.

Gemäß einer weiteren bevorzugten Ausführungsform weist Komponente (A) einen Schmelzpunkt von 170 bis 205 °C, bevorzugt von 175 bis 200 °C auf, wobei der Schmelzpunkt mittels DSC gemäß ISO 11357-3 (2013) mit einer Aufheizrate von 20 K/min bestimmt wird.

Eine andere bevorzugte Ausführungsform sieht vor, dass die Komponente (A) ausgewählt ist aus der Gruppe bestehend aus PA 616, PA 1016 und Mischungen hiervon, wobei PA 616 besonders bevorzugt ist.

### Komponente (B)

Gemäß einer bevorzugten Ausführungsform weist Komponente (B) eine relative Viskosität im Bereich von 1,45 bis 1,70 und bevorzugt von 1,50 bis 1,67 auf. Die relative Viskosität wird dabei bei 20°C gemessen nach ISO 307 (2007) in einer Lösung von 0,5 g Polymer in 100 ml m-Kresol.

Nach einer weiteren bevorzugten Ausführungsform liegt der Gehalt der Aminoendgruppen von Komponente (B) im Bereich von 85 bis 150 mmol/kg und bevorzugt von 90 bis 125 mmol/kg.

Gemäß einer weiteren bevorzugten Ausführungsform weist Komponente (B) einen Schmelzpunkt von 160 bis 235 °C, bevorzugt von 170 bis 225 °C, besonders bevorzugt von 175 bis 210 °C auf, wobei der Schmelzpunkt mittels DSC gemäß ISO 11357-3 (2013) mit einer Aufheizrate von 20 K/min bestimmt wird.

Eine andere bevorzugte Ausführungsform sieht vor, dass die Komponente (B) ausgewählt ist aus der Gruppe bestehend aus PA 11, PA 12, PA 69, PA 610, PA 612, PA 616, PA 1010, PA 1012, PA 1014, PA 1016, PA 1018, PA 1212 und Mischungen hiervon.

Besonders bevorzugt ist Komponente (B) ausgewählt aus der Gruppe bestehend aus PA 12, PA 616, PA 1010, PA 1014, PA 1016 und Mischungen hiervon.

### Komponente (C)

Der mindestens eine funktionalisierte Schlagzähmodifikator ist ausgewählt aus der Gruppe bestehend aus Polyolefin-Copolymeren, Styrol-Copolymeren, Styrol-Blockcopolymeren, ionischen Ethylen-Copolymeren mit Säuregruppen, wobei diese zumindest teilweise durch Metallionen neutralisiert sind und Mischungen hiervon.

Gemäß einer bevorzugten Ausführungsform der vorliegenden Erfindung erfolgt die Funktionalisierung von Komponente (C) durch Copolymerisation und/oder durch Pfropfen. Dazu wird besonders bevorzugt eine Verbindung ausgewählt aus der Gruppe bestehend aus ungesättigten Carbonsäuren, ungesättigten Carbonsäurederivaten und Mischungen hiervon und/oder ungesättigten Glycidylverbindungen verwendet. Diese ist insbesondere bevorzugt ausgewählt aus der Gruppe bestehend aus ungesättigten Carbonsäureestern, insbesondere Acrylsäureestern und/oder Methacrylsäureestern, ungesättigten Carbonsäureanhydriden, insbesondere Maleinsäureanhydrid, Glycidylacrylsäure, Glycidylmethacrylsäure, α-Ethylacrylsäure, Maleinsäure, Fumarsäure, Itaconsäure, Citraconsäure, Aconitsäure, Tetrahydrophthalsäure, Butenylsuccinsäure und Mischungen hiervon.

Wenn die Funktionalisierung durch Copolymerisation erfolgt, liegt der Gewichtsanteil jeder einzelnen zur Funktionalisierung eingesetzten Verbindung bevorzugt im Bereich von 3 bis 25 Gew.-%, besonders bevorzugt von 4 bis 20 Gew.-% und insbesondere bevorzugt von 4,5 bis 15 Gew.-%, jeweils bezogen auf das Gesamtgewicht von Komponente (C).

Sofern die Funktionalisierung durch Pfropfung erfolgt, liegt der Gewichtsanteil jeder einzelnen zur Funktionalisierung eingesetzten Verbindung bevorzugt im Bereich von 0,3 bis 2,5 Gew.-%, besonders bevorzugt von 0,4 bis 2,0 Gew.-% und insbesondere bevorzugt von 0,5 bis 1,9 Gew.-%, jeweils bezogen auf das Gesamtgewicht von Komponente (C).

Durch Copolymersiation funktionalisierte Schlagzähmodifikatoren können zusätzlich auch noch durch Pfropfung funktionalisiert sein.

Die Polyolefin-Copolymeren sind bevorzugt ausgewählt aus der Gruppe bestehend aus Ethylen-α-Olefin-Copolymeren, Propylen-α-Olefin-Copolymeren, Ethylen-Propylen-Copolymeren, Ethylen-Propylen-Dien-Copolymeren und deren Mischungen, wobei die α-Olefine bevorzugt 3 bis 18 Kohlenstoffatome besitzen. Besonders bevorzugt sind die α-Olefine ausgewählt aus der Gruppe bestehen aus Propen, 1-Buten, 1-Penten, 1-Hexen, 1-Octen, 1-Decen 1-Dodecen und Mischungen davon.

Beispiele für Ethylen-α-Olefin-Copolymere sind lineare Polyethylene mit mittleren Dichten im Bereich von 0,941 bis 0,950 g/cm³ (PE-LMD), lineare Polyethylene mit niedrigen Dichten im Bereich von 0,911 bis 0,940 g/cm³ (PE-LLD), lineare Polyethylene mit sehr niedrigen Dichten im Bereich von 0,900 bis 0,910 g/cm³ (PE-VLD), lineare Polyethylene mit ultraniedrigen Dichten im Bereich von 0,860 bis 0,899 g/cm³ (PE-ULD), Ethylen-Propylen-Copolymere oder Ethylen-1-Buten-Copolymere.

Unter den Ethylen-α-Olefin-Copolymeren sind Ethylen-Propylen-Copolymere, Ethylen-1-Buten-Copolymere oder Ethylen-Propylen-1-Buten-Copolymere bevorzugt.

Unter den Ethylen-Propylen-1-Buten-Copolymeren sind Copolymere bevorzugt, in denen die Monomere Ethylen a), Propylen b) und 1-Buten c) in folgenden molaren Anteilen verwendet werden:
a) Ethylen: 65 bis 90 Mol-%, bevorzugt 65 bis 87 Mol-%, besonders bevorzugt 71 bis 84 Mol-%;
b) Propylen: 8 bis 33 Mol-%, bevorzugt 10 bis 25 Mol-%, besonders bevorzugt 12 bis 20 Mol-%; sowie
c) 1-Buten: 2 bis 25 Mol-%, bevorzugt 3 bis 20 Mol-%, besonders bevorzugt 4 bis 15 Mol-%, ganz besonders bevorzugt 4 bis 9 Mol-%;
wobei sich die Monomere a), bis c) auf 100 Mol-% ergänzen.

Das Ethylen-Propylen-1-Buten-Copolymere kann die genannten Monomere a) bis c) in den angegebenen bevorzugten molaren Anteilen enthalten, jedoch ist in der Bezeichnung Ethylen-Propylen-1-Buten-Copolymer ebenso die Möglichkeit umfasst, dass mehrere Copolymere gemischt werden, die jeweils zwei der Monomere a) bis c), d.h. a) und b), a) und c) oder b) und c), enthalten, so dass in der Mischung die Monomere a) bis c) in den bevorzugten molaren Anteilen vorliegen. Besonders bevorzugt besteht solch eine Mischung aus einem Copolymer der Monomere a) und b) und einem Copolymer der Monomere a) und c), so dass in der Mischung die Monomere a) bis c) in den bevorzugten molaren Anteilen vorliegen.

Die Styrol-Copolymere sind bevorzugt Styrol-Copolymere mit einem Co-Monomer ausgewählt aus der Gruppe bestehend aus Butadien, Isopren, Acrylat und Mischungen davon.

Die Styrol-Blockcopolymeren sind bevorzugt ausgewählt aus der Gruppe bestehend aus Styrol-Butadien-Styrol-Triblockcopolymeren (SBS), Styrol-Isopren-Styrol-Triblockcopolymeren (SIS), Styrol-Ethylen/Butylen-Styrol-Triblockcopolymer (SEBS), Styrol-Ethylen/Popylen-Styrol-Triblockcopolymer (SEPS) und Mischungen davon.

Bei den Styrol-Ethylen/Butylen-Styrol-Triblockcopolymeren handelt es sich um lineare Triblockcopolymere aus einem Ethylen/Butylen-Block und zwei Styrolblöcken.

Bei den Styrol-Ethylen/Propylen-Styrol-Triblockcopolymeren handelt es sich um lineare Triblockcopolymere aus einem Ethylen/Propylen-Block und zwei Styrolblöcken.

Der Styrolanteil in den Styrol-Ethylen/Butylen-Styrol-Triblockcopolymeren oder Styrol-Ethylen/Popylen-Styrol-Triblockcopolymeren beträgt bevorzugt von 20 bis 45 Gew.-%, besonders bevorzugt von 25 bis 40 Gew.-% und ganz besonders bevorzugt von 25 bis 35 Gew.-%.

Die Styrol-Ethylen/Butylen-Styrol-Triblockcopolymere weisen bevorzugt eine Schmelze-Volumenfließrate von 90 bis 160 cm³/10min, besonders bevorzugt von 100 bis 150 cm³/10min und ganz besonders bevorzugt von 110 bis 140 cm³/10min auf. Die Schmelz-Volumenfließrate wird dabei bei 275°C und 5 kg nach ISO 1133 gemessen.

Die ionischen Ethylen-Copolymeren bestehen bevorzugt aus den Monomeren ausgewählt aus der Gruppe bestehend aus Ethylen, Propylen, Butylen, Acrylsäure, Acrylat, Methacrylsäure, Methacrylat und Mischungen davon, wobei die Säuregruppen teilweise mit Metallionen neutralisiert sind, besonders bevorzugt sind Ethylen-Methacrylsäure-Copolymere oder Ethylen-Methacrylsäure-Acrylat-Copolymere in denen die Säuregruppen teilweise mit Metallionen neutralisiert sind. Bei den zur Neutralisation verwendeten Metallionen handelt es sich bevorzugt um Natrium-, Zink-, Kalium-, Lithium-, Magnesium-Ionen und Mischungen davon, besonders bevorzugt sind Natrium-, Zink- und Magnesium-Ionen.

Sobald die als Schlagzähmodifikator verwendeten Copolymere, Diene als Monomere enthalten, werden sie bevorzugt in hydrierter, vernetzter oder vulkanisierter Form in den erfindungsgemäßen Polyamid-Formmassen eingesetzt. In einer besonders bevorzugten Ausführungsform der erfindungsgemäßen Polyamid-Formmasse ist der Schlagzähmodifikator ausgewählt aus der Gruppe bestehend aus
- Styrol-Ethylen/Butylen-Styrol-Triblockcopolymeren mit 20 bis 45 Gew.-% Styrol, gepfropft mit 0,3 bis 2,5 Gew.-% Maleinsäureanhydrid;
- Ethylen-Propylen-1-Buten-Copolymeren in denen die Monomere Ethylen a), Propylen b) und 1-Buten c) in den folgenden molaren Anteilen verwendet werden:
   a) Ethylen: 65 bis 90 Mol-%, bevorzugt 65 bis 87 Mol-%, besonders bevorzugt 71 bis 84 Mol-%;
   b) Propylen: 8 bis 33 Mol-%, bevorzugt 10 bis 25 Mol-%, besonders bevorzugt 12 bis 20 Mol-%; sowie
   c) 1-Buten: 2 bis 25 Mol-%, bevorzugt 3 bis 20 Mol-%, besonders bevorzugt 4 bis 15 Mol-%, ganz besonders bevorzugt 4 bis 9 Mol-%;
      wobei sich die Monomere a), bis c) zu 100 Mol-% addieren, und die Ethylen-Propylen-l-Buten-Copolymeren mit 0,3 bis 2,5 Gew.-% Maleinsäureanhydrid gepfropft sind;

- Ethylen-1-Buten-Copolymeren gepfropft mit 0,3 bis 2,5 Gew.-% Maleinsäureanhydrid; und
- Mischungen hiervon.

In einer besonders bevorzugten Ausführungsform der erfindungsgemäßen Polyamid-Formmasse wird der Schlagzähmodifikator ausgewählt aus der Gruppe bestehend aus
- einem Styrol-Ethylen/Butylen-Styrol-Triblockcopolymer mit 20 bis 35 Gew.-% Styrol, gepfropft mit 1,4 bis 1,9 Gew.-% Maleinsäureanhydrid;
- Ethylen-Propylen-1-Buten-Copolymeren bestehend aus 71 bis 84 Mol% Ethylen a), 12 bis 20 Mol-% Propylen b) sowie 4 bis 9 Mol-% 1-Buten c), wobei sich die Komponenten a) bis c) zu 100 Mol-% addieren und die Ethylen-Propylen-1-Buten-Copolymeren mit 0,3 bis 0,9 Gew.-% Maleinsäureanhydrid gepfropft sind;
- Ethylen-1-Buten-Copolymeren gepfropft mit 0,9 bis 1,5 Gew.-% Maleinsäureanhydrid; und
- Mischungen hiervon.

In einer weiteren besonders bevorzugten Ausführungsform der erfindungsgemäßen Polyamid-Formmasse wird der Schlagzähmodifikator ausgewählt aus der Gruppe bestehend aus
- einem Styrol-Ethylen/Butylen-Styrol-Triblockcopolymer mit 30 Gew.-% Styrol, gepfropft mit 1,7 Gew.-% Maleinsäureanhydrid;
- einem Blend aus Ethylen-Propylen-Copolymer und Ethylen-1-Buten-Copolymer im Gewichtsverhältnis 67 : 33, gepfropft mit 0,6 Gew.-% Maleinsäureanhydrid;
- einem Ethylen-1-Buten-Copolymeren gepfropft mit 1,2 Gew.-% Maleinsäureanhydrid; und
- Mischungen davon.

Der mindestens eine Schlagzähmodifikator gemäß Komponente (C) kann auch in Form einer Mischung oder eines Blends mit einem oder mehreren unfunktionalisierten Schlagzähmodifikator gemäß Komponente (D) eingesetzt werden. Gemäß einer bevorzugten Ausführungsform enthalten die erfindungsgemäßen Polyamid-Formmassen aber keine unfunktionalisierten Schlagzähmodifikatoren.

### Komponente (D)

Die Zusatzstoffe gemäß Komponente (D) sind ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Metalldesaktivatoren Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Kondensationskatalysatoren, Kettenreglern, Entschäumern, Antiblockmitteln, kettenverlängernden Additiven, optischen Aufhellern, IR-Absorbern, NIR-Absorbern, halogenhaltigen Flammschutzmitteln, halogenfreien Flammschutzmitteln, unfunktionalisierten Schlagzähmodifikatoren, natürlichen Schichtsilikaten, synthetischen Schichtsilikaten, metallischen Pigmenten, Metallflittern, metallbeschichteten Partikeln, teilchenförmigen Füllstoffen, faserförmigen Füllstoffen, nanoskaligen Füllstoffen mit einem Partikeldurchmesser (*d₉₅*) von maximal 100 nm, bestimmt mittels Laserbeugung nach ISO 13320 (2009) und Mischungen davon.

Die Schichtsilikate und Füllstoffe können oberflächenbehandelt sein. Dies kann mit einem geeigneten Schlichte- oder Haftvermittlersystem geschehen. Dazu können zum Beispiel Systeme auf Basis von Fettsäuren, Wachsen, Silanen, Titanaten, Polyamiden, Urethanen, Polyhydroxyether, Epoxiden, Nickel respektive Kombinationen oder Mischungen davon verwendet werden.

Hinsichtlich der faserförmigen bzw. verstärkenden Füllstoffe bestehen grundsätzlich keinerlei Beschränkungen. Vorzugsweise sind diese ausgewählt aus der Gruppe bestehend aus Glasfasern, Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon.

Als teilchenförmige Füllstoffe kommen alle dem Fachmann bekannten Füllstoffe in Frage. Hierzu zählen insbesondere partikuläre Füllstoffe ausgewählt aus der Gruppe bestehend aus Mineralen, Talk, Glimmer, Dolomit, Silikaten, Quarz, Titandioxid, Wollastonit, Kaolin, Kieselsäuren, Magnesiumcarbonat, Magnesiumhydroxid, Kreide, gemahlenem Glas, Glasflakes, gemahlenen Carbonfasern, Aramidfasern, gemahlenem oder gefälltem Calciumcarbonat, Kalk, Feldspat, Bariumsulfat, Zinksulfid, Zinkoxid, permanentmagnetischen oder magnetisierbaren Metallen oder Legierungen, Glaskugeln, Hohlglaskugeln, hohlkugeligen Silikatfüllstoffen und Mischungen hiervon.

Bevorzugt sind die Zusatzstoffe gemäß Komponente (D) ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, photochromen Agenzien, Antistatika, Entformungsmitteln, Antiblockmitteln, kettenverlängernden Additiven, optischen Aufhellern, IR-Absorbern, NIR-Absorbern, natürlichen Schichtsilikaten, synthetischen Schichtsilikaten, Metallflittern, teilchenförmigen Füllstoffen, faserförmigen Füllstoffen, nanoskaligen Füllstoffen mit einem Partikeldurchmesser (d₉₅) von maximal 100 nm, bestimmt mittels Laserbeugung nach ISO 13320 (2009) und Mischungen davon.

Besonders bevorzugt sind die Zusatzstoffe gemäß Komponente (D) ausgewählt aus der Gruppe bestehend aus anorganischen Stabilisatoren, organischen Stabilisatoren, insbesondere Antioxidantien, Antiozonantien und/oder Lichtschutzmitteln, Gleitmitteln, Farbstoffen, Markierungsmitteln, anorganischen Pigmenten, organischen Pigmenten, Ruß, Graphit, Entformungsmitteln, Antiblockmitteln, kettenverlängernden Additiven, optischen Aufhellern, IR-Absorbern, NIR-Absorbern, teilchenförmigen Füllstoffen, faserförmigen Füllstoffen und Mischungen davon.

### Formkörper

Die erfindungsgemäßen Formkörper werden bevorzugt über Extrusions-verfahren hergestellt.

Besonders bevorzugt sind dabei Formkörper ausgewählt ist aus der Gruppe bestehend aus mittels Extrusion geformten Leitungen und Behältern. Bevorzugte Leitungen sind Kühlleitungen, insbesondere für Motoren oder Batterien, Heizleitungen, insbesondere im Innenraum von Gebäuden oder in Batterien, Entlüftungsleitungen für das Kurbelgehäuse und Harnstoffleitungen (z.B. AdBlue).

### Verwendung

Die erfindungsgemäße Polyamid-Formmasse eignet sich also zur Verwendung zur Herstellung von Formkörpern ausgewählt aus der Gruppe bestehend aus mittels Extrusion geformten Leitungen und Behältern.

Besonders bevorzugt ist dabei die Verwendung für Leitungen und Behälter ausgewählt aus der Gruppe bestehend aus mittels Extrusion geformten Leitungen und Behältern. Bevorzugte Leitungen sind Kühlleitungen, insbesondere für Motoren oder Batterien, Heizleitungen, insbesondere im Innenraum von Gebäuden oder in Batterien, Entlüftungsleitungen für das Kurbelgehäuse und Harnstoffleitungen (z.B. AdBlue).

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet.

### Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Schmelzpunkt

Die Bestimmung des Schmelzpunkts erfolgte nach ISO 11357-3 (2013) an Granulat.

Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Der Schmelzpunkt wurde bei der zweiten Aufheizung bestimmt.

Als Schmelzpunkt wurde die Temperatur am Peakmaximum angegeben. Der Mittelpunkt des Glasübergangsbereichs, welcher als Glasübergangstemperatur (Tg) angegeben wurde, wurde nach der Methode "Half Height" ermittelt.

### Zug-E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Reißdehnung

Die Bestimmung von der Reißdehnung wurde gemäß ISO 527 (2012) bei 23°C mit einer Zuggeschwindigkeit von 50 mm/min an einem ISO-Zugstab, Typ A1 (Masse 170 x 20/10 x 4 mm), hergestellt gemäß der Norm ISO/CD 3167 (2003), durchgeführt.

### Kerbschlagzähigkeit nach Charpy

Die Bestimmung der Kerbschlagzähigkeit nach Charpy wurde gemäß DIN EN ISO 179/2eA (2000) bei 23 °C und - 40 °C an einem ISO-Prüfstab, Typ B1 (Masse 80 x 10 x 4 mm), hergestellt gemäß der Norm ISO/CD 3167 (2003), durchgeführt.

### Schmelzefestigkeit

Unter der Schmelzefestigkeit wird das "Standvermögen" des Vorformlings bei der Extrusion verstanden. Wie bereits oben erwähnt sind zum Extrudieren nur Formmassen geeignet, deren Schmelzefestigkeit in einem bestimmten Bereich, d.h. in einem geeigneten Verarbeitungsfenster, liegt. Die Anmelderin hat ein eigenes, praxisbezogenes Verfahren entwickelt, nach welchem beurteilt wird, ob die Schmelzefestigkeit im genannten Bereich liegt. Bei diesem Verfahren wird ein Schmelzeschlauch kontinuierlich über einen Winkelkopf extrudiert. Als Messgröße wird die Zeit verwendet, die der Schlauch benötigt, um den Abstand von der Düse bis zum Boden zurückzulegen. Dieser Abstand beträgt bei der verwendeten Anordnung 112 cm. Bei der Messung der Schmelzefestigkeit wird mit einem konstanten Ausstoß von 100 Gramm Formmassen-Schmelze pro Minute und bei eingestellten Zylinder- , Werkzeug und Düsentemperaturen von 260 °C gefahren. Die Zeitmessung wird in dem Moment gestartet, wenn der aus einer ringförmigen Extrusionsdüse kontinuierlich austretende Schmelzeschlauch an der Extrusionsdüse mit einem Spachtel abgestochen wird. Man stoppt die Zeit, sobald der neu austretende und nach unten wandernde Schlauchabschnitt den Boden berührt. Ein Material, das das zunehmende Eigengewicht (durch die laufend extrudierte Schmelze) schlecht tragen kann, d.h. sich viskos zu dehnen beginnt, wird sich stärker längen und dadurch die Spitze des Schmelzeschlauchs den Boden früher berühren, d.h. die kürzere Messzeit entspricht einer geringeren Schmelzefestigkeit. Der praktische Vorteil dieser Methode zur Ermittlung der Extrudierbarkeit ist, dass sie nicht nur auf einer einzigen isoliert betrachteten Eigenschaft wie dem Molekulargewicht des Polyamids oder einer Viskosität beruht, sondern dass noch alle weiteren Einflussgrößen, die für das Verhalten des extrudierten Vorformlings relevant sind, automatisch und auf integrale Weise in die gemessene Zeit einfließen.

### MVR (melt volume rate) bzw. MFR (melt flow rate)

Die Bestimmung des MVR bzw. MFR erfolgte nach ISO 1133-1 (2012), und zwar am Granulat der Formmassen der Beispiele bzw. Vergleichsbeispiele bei 275 °C und einer Belastung von 21,6 kg oder am Granulat der Schlagzähmodifikatoren unter den in der Tabelle 1 angegebenen Bedingungen.

### Endgruppen (Amino- und Carboxyendgruppen)

Die Amino- (NH₂) und Carboxy (COOH)-Endgruppenkonzentrationen werden mittels einer potentiometrischen Titration bestimmt. Für die Amino-Endgruppen werden hierzu 0,2 bis 1,0 g Polyamid in einem Gemisch aus 50 ml m-Kresol und 25 ml Isopropanol bei 50 bis 90 °C gelöst und nach Zusatz von Aminocapronsäure mit einer 0,05-molaren Perchlorsäurelösung titriert. Zur Bestimmung der COOH-Endgruppen werden 0,2 bis 1,0 g der zu bestimmenden Probe je nach Löslichkeit in Benzylalkohol oder einem Gemisch aus o-Kresol und Benzylalkohol bei 100 °C gelöst und nach Zugabe von Benzoesäure mit einer 0,1 molaren Tetra-n-butylammoniumhydroxidlösung titriert.

### Optische Beurteilung extrudierter Formkörer

Die Beurteilung erfolgte durch Betrachtung des Schlauchs der Schmelzefestigkeitsmessung mit bloßem Auge ohne Vergrößerung:
+ glatte Oberfläche
- Pickel in der Oberfläche
-- Knoten in der Oberfläche

Die Oberfläche der Rohre muss glatt sein, ansonsten sind sie nicht verwendbar.

### Herstellung der Prüfkörper

Die Prüfkörper wurden auf einer Spritzgussmaschine der Firma Arburg, Modell Allrounder 320-210-750 Hydronica hergestellt. Dabei wurden aufsteigende Zylindertemperaturen von 270 °C bis 290 °C verwendet.

Die ISO-Zugstäbe und ISO-Prüfstäbe wurden bei einer Werkzeugtemperatur von 30 °C hergestellt.

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, gelagert.

### 2 Ausgangsmaterialien

Die in den Beispielen und Vergleichsbeispielen verwendeten Materialien werden in den Tabellen 1 und 2 zusammengefasst.

**Tabelle 1: In den Beispielen und Vergleichsbeispielen verwendete Materialien.**

| **Komponente** | **Beschreibung** | **Hersteller** |
|---|---|---|
| Polyamid 616 (A) | Teilkristallines linear aliphatisches Polyamid aus 1,6-Hexandiamin und 1,16-Hexadecandisäure Schmelzpunkt 195 °C (A) RV 2,17; NH₂ 45 mmol/kg; COOH 19 mmol/kg | EMS-CHEMIE AG, Schweiz |
| Polyamid 616 Carboxyendgruppen | Teilkristallines linear aliphatisches Polyamid aus 1,6-Hexandiamin und 1,16-Hexadecandisäure Schmelzpunkt 195 °C RV 1,96; NH₂ 32 mmol/kg; COOH 56 mmol/kg | EMS-CHEMIE AG, Schweiz |
| Polyamid 12 (B) | Teilkristallines linear aliphatisches Polyamid aus Laurinlactam Schmelzpunkt 178 °C (B) RV 1,65; NH₂ 103 mmol/kg; COOH 7 mmol/kg | EMS-CHEMIE AG, Schweiz |
| Polyamid 12 RV210 | Teilkristallines linear aliphatisches Polyamid aus Laurinlactam Schmelzpunkt 178 °C RV 2,10; NH₂ 55 mmol/kg; COOH 8 mmol/kg | EMS-CHEMIE AG, Schweiz |
| Polyamid 12 RV225 | Teilkristallines linear aliphatisches Polyamid aus Laurinlactam Schmelzpunkt 178 °C RV 2,25; NH₂ 24 mmol/kg; COOH 26 mmol/kg | EMS-CHEMIE AG, Schweiz |
| Schlagzähmodifikator (C1) | Blend aus Ethylen/Propylen-Copolymer und Ethylen/1-Buten-Copolymer im Gewichtsverhältniss 67 : 33 0,6 Gew.-% Maleinsäureanhydrid MVR^{∗} 1,3 cm³/10min bei 230 °C und 2,16 kg Dichte 0,875 g/cm³ Handelsname Tafmer MC201 | Mitsui Chemicals, Japan |
| Schlagzähmodifikator (C2) | Ethylen/1-Buten-Copolymer MFR^{∗∗} 2,2 g/10min bei 230 °C und 2,16 kg Dichte 0,885 g/cm³ Handelsname Tafmer DF810 | Mitsui Chemicals, Japan |
| Schlagzähmodifikator (C3) | Funktionalisiertes Styrol-Ethylen/Butylen-Styrol-Block-copolymer mit 30 Gew-% Styrol 1,7 Gew.-% Maleinsäureanhydrid MVR^{∗} 130 cm³/10min bei 175 °C und 5 kg Dichte 0,91 g/cm³ Handelsname Kraton FG1901 GT | Kraton Polymers LLC, USA |
| Schlagzähmodifikator (C4) | Zink-Ionomer auf Basis Ethylen-Methacrylsäure-Copolymer MFR^{∗∗} 0,8 g/10min bei 190 °C und 2,16 kg Dichte 0,96 g/cm³ Handelsname Surlyn 9320 | DuPont de Nemours International S.A., Schweiz |
| Schlagzähmodifikator (C5) | Ethylen-tert.-Butylacrylat-Acrylsäure-Copolymer MFR^{∗∗} 7,0 g/10min bei 190 °C und 2,16 kg Dichte 0,927 g/cm³ Handelsname Lucalen A2920M | LyondellBasel Industries N.V., Niederlande |

| | | |
|---|---|---|
| RV: relative Viskosität, gemessen an einer Lsg. aus 0,5 g Polyamid in 100 ml m-Kresol bei 20°C ^{∗} melt volume rate, ^{∗∗} melt flow rate NH₂ Aminoendgruppen, COOH Carboxygruppen | | |

**Tabelle 2: Verwendete Zusatzstoffe.**

| **Komponente** | **Beschreibung** | **Handelsname** | **Hersteller** |
|---|---|---|---|
| Antioxidans 1 | Bis[3,3-bis-(4'hyd roxy-3'-tert-butyl-phenyl)butansäure]glykolester CAS-Nr. 32509-66-3 | Hostanox O 3 P | Clariant Produkte (Deutschland) GmbH, Deutschland |
| Antioxidans 2 | Tetrakis(2,4-di-*tert*-butylphenyl)-4,4'-biphenyldi-phosphonit CAS-Nr. 119345-01-6 | Hostanox P-EPQ | Clariant Produkte (Deutschland) GmbH, Deutschland |
| Gleitmittel | Magnesiumstearat | Magnesiumstearat AV | Bärlocher GmbH, Deutschland |
| Schwarz-Masterbatch | Farbruss-Masterbatch auf Polyethylenbasis mit 40 Gew.-% Farbruss | Euthylen Schwarz 00-6005 C4 | BASF Color Solutions, Deutschland |

Alle Beispiele und Vergleichsbeispiele enthalten 1,75 Gew.-% Zusatzstoffe, welche sich wie folgt zusammensetzen: Antioxidans 1 0,8 Gew.-%, Antioxidans 2 0,1 % Gew.-%, Gleitmittel 0,1 Gew.-% und Schwarzmasterbatch 0,75 Gew.-%.

### 3 Beispiele und Vergleichsbeispiele

### 3.1 Allgemeine Herstellungs- und Verarbeitungsvorschrift für die Polyamid-Formmassen

Zur Herstellung der erfindungsgemäßen Polyamid-Formmasse werden die Komponenten (A) und (C) und gegebenenfalls (B) und/oder (D) auf üblichen Compoundiermaschinen, wie z.B. ein- oder zweiwelligen Extrudern oder Schneckenknetern gemischt. Die Komponenten werden dabei einzelnen über gravimetrische Dosierwaagen in den Einzug oder jeweils in einen Sidefeeder dosiert oder in Form eines Dryblends zugeführt.

Werden Zusatzstoffe (Komponente (D)) verwendet, können diese direkt oder in Form eines Masterbatches eingebracht werden. Bei dem Trägermaterial des Masterbatches handelt es sich bevorzugt um ein Polyamid oder ein Polyolefin. Unter den Polyamiden eignet sich dazu besonders das Polyamid der jeweiligen Komponenten A.

Zur Dryblend-Herstellung werden die getrockneten Granulat der Komponenten (A), (C) und gegebenenfalls (B) und gegebenenfalls weitere Zusatzstoffe (Komponente (D)) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 250 bis 310 °C, wobei die Temperatur des ersten Zylinders unter 90 °C eingestellt werden kann. Vor der Düse kann entgast werden. Dies kann mittels Vakuum oder atmosphärisch erfolgen. Die Schmelze wird in Strangform ausgetragen, im Wasserbad bei 10 bis 80 °C abgekühlt und anschließend granuliert. Das Granulat wird bei 80 bis 120 °C unter Stickstoff oder im Vakuum auf einen Wassergehalt von unter 0,1 Gew.-% getrocknet.

Die Verarbeitung der erfindungsgemäßen Polyamid-Formmassen im Spritzguss erfolgt bei Zylindertemperaturen von 260 bis 310 °C, wobei ein vom Einzug zur Düse hin auf- und absteigendes Temperaturprofil verwendet werden kann. Die Werkzeugtemperatur wird auf eine Temperatur von 15 bis 60 °C, bevorzugt 20 bis 40 °C eingestellt.

### 3.2 Herstellung der Polyamid-Formmasse gemäß Beispiel 1

Die getrockneten Granulate (A), (B) und (C) wurden mit den Zusatzstoffen (D) zu einem Dryblend vermischt, und zwar in dem in der Tabelle 3 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Werner & Pfleiderer Typ ZSK 25 hergestellt. Das Dryblend wurde dabei über eine Dosierwaage in den Einzug dosiert.

Die Temperatur des ersten Gehäuses wurde auf 50 °C eingestellt, für die restlichen Gehäuse wurde ein auf- und absteigendes Temperaturprofil von 260 °C via 300 °C bis 280 °C verwendet. Es wurde eine Drehzahl von 250 U/min und ein Durchsatz von 14 kg/h verwendet und atmosphärisch entgast. Der Schmelzestrang wurde im Wasserbad abgekühlt, geschnitten und das erhaltene Granulat bei 110 °C für 24 h im Vakuum (30 mbar) auf einen Wassergehalt von unter 0,1 Gew.-% getrocknet.

### 3.3 Beispiele und Vergleichsbeispiele

In der folgenden Tabellen 3 werden die Resultate der Beispiele und Vergleichsbeispiele gemäß vorliegender Erfindung zusammengefasst.

Die Beispiele B1, B6, B9, B11 und B12 sind nicht erfindungsgemäß.

Die Extrudierbarkeit der Polyamid-Formmassen wurde dabei über den MVR und über die Schmelzefestigkeit beurteilt. Für extrudierbare Polyamid-Formmassen liegt der MVR im Bereich von 10 bis 120 cm³/10min, bevorzugt von 15 bis 100 cm³/10min und besonders bevorzugt 20 bis 90 cm³/10min und die Schmelzefestigkeit im Bereich von 15 bis 60 Sekunden und bevorzugt 18 bis 55 Sekunden. Die optische Beurteilung wurde wie unter Punkt 1 beschrieben an extrudierten Schläuchen durchgeführt.

**Tabelle 3: Beispiele und Vergleichsbeispiele.**

| **Komponenten** | **Einheit** | **Beispiele und Vergleichsbeispiele** | | | | | | | | | | | | | |
|---|---|---|---|---|---|---|---|---|---|---|---|---|---|---|---|
| | | **B1** | **VB2** | **VB3** | **B4** | **VB5** | **B6** | **VB7** | **VB8** | **B9** | **VB10** | **B11** | **B12** | **VB13** | **VB14** |
| PA 616 (A) | Gew.-% | 78,25 | - | - | 58,25 | - | 78,25 | - | - | 78,25 | - | 58,25 | 78,25 | 78,25 | - |
| PA 616 Carboxyendgr. | Gew.-% | - | - | - | - | - | - | - | - | - | - | 20 | - | - | - |
| PA 12 RV210 | Gew.-% | - | 78,25 | - | - | 58,25 | - | 78,25 | - | - | 78,25 | - | - | - | 78,25 |
| PA 12 (B) | Gew.-% | - | - | - | 20 | 20 | - | - | - | - | - | - | - | - | - |
| PA 12 RV225 | Gew.-% | - | - | 78,25 | - | - | - | - | 78,25 | - | - | - | - | - | - |
| Schlagzähmod. (C1) | Gew.-% | 20 | 20 | 20 | 20 | 20 | - | - | - | - | - | 20 | 10 | - | - |
| Schlagzähmod.(C2) | Gew.-% | - | - | - | - | - | - | - | - | - | - | - | 10 | - | - |
| Schlagzähmod. (C3) | Gew.-% | - | - | - | - | - | 20 | 20 | 20 | - | - | - | - | - | - |
| Schlagzähmod. (C4) | Gew.-% | - | - | - | - | - | - | - | - | 20 | 20 | - | - | - | - |
| Schlagzähmod. (C5) | Gew.-% | - | - | - | - | - | - | - | - | - | - | - | - | 20 | 20 |
| Zusatzstoffe | Gew.-% | 1,75 | 1,75 | 1,75 | 1,75 | 1,75 | 1,75 | 1,75 | 1,75 | 1,75 | 1,75 | 1,75 | 1,75 | 1,75 | 1,75 |
| **Messwerte** | | | | | | | | | | | | | | | |
| Extrudierbarkeit | - | ja | ja | ja | ja | nein | ja | nein | nein | ja | nein | ja | ja | ja | nein |
| Optische Beurteilung | - | + | + | + | + | + | + | - | - | + | - | + | + | - | - |
| Zug-E-Modul | MPa | 1150 | 1000 | 1010 | 1020 | 1020 | 1150 | 1070 | 1050 | 1140 | 1100 | 1170 | 1190 | 1260 | 1290 |
| Reißdehnung | % | 250 | 220 | 190 | 310 | 220 | 220 | 200 | 200 | 270 | 160 | 280 | 270 | 220 | 130 |
| Kerbschlagzähigkeit | | | | | | | | | | | | | | | |
| 23°C | kJ/m² | 92 | 68 | 48 | 90 | 73 | 80 | 56 | 25 | 129 | 124 | 91 | 90 | 13 | 27 |
| -40°C | kJ/m² | 21 | 17 | 14 | 20 | 16 | 21 | 17 | 11 | 22 | 18 | 22 | 19 | 11 | 10 |

| | | | | | | | | | | | | | | | |
|---|---|---|---|---|---|---|---|---|---|---|---|---|---|---|---|
| +: glatte Oberfläche, -: Pickel in der Oberfläche, --: Knoten in der Oberfläche. | | | | | | | | | | | | | | | |

### 4 Diskussion der Ergebnisse

Der Tabelle 3 lässt sich entnehmen, dass die erfindungsgemäßen Polyamid-Formmassen verbesserte Kerbschlagzähigkeiten und Reißdehnungen aufweisen und darüber hinaus extrudierbar sind und die extrudierten Schläuche eine glatte Oberfläche aufweisen.

Die Polyamid-Formmassen gemäß des erfindungsgemäßen Beispiels B1 und der Vergleichsbeispiele VB1 und VB2 enthalten den gleichen Schlagzähmodifikator in den gleichen Mengen. Sowohl die Reißdehnung als auch die Kerbschlagzähigkeit bei 23°C und -40°C sind für die erfindungsgemäßen Polyamid-Formmasse deutlich höher. Diese Verbesserung ist auf den Austausch von Polyamid 12 durch das als Komponente (A) erfindungsgemäße Polyamid 616 zurückzuführen. Gleiche Tendenzen lassen sich dem Vergleich von B4 mit VB5, B6 mit VB7 und VB8 sowie B9 mit VB10 entnehmen. Es wurde in den zu vergleichenden Beispielen jeweils der gleiche Schlagzähmodifikator in den gleichen Mengen gearbeitet und nur das für Komponente (A) erfindungsgemäße Polyamid ausgetauscht. Dabei zeigte sich darüber hinaus, dass die Polyamid-Formmassen gemäß den Vergleichsbeispielen meist nicht extrudierbar waren und/oder schlechte optische Eigenschaften aufwiesen. Die erfindungsgemäßen Polyamid-Formmassen hingegen zeigten gute optische Eigenschaften, d.h. eine glatte Oberfläche und waren extrudierbar.

Die Vergleichsbeispiele VB13 und VB14 wurden mit einem nicht anspruchsgemäßen Schlagzähmodifikator durchgeführt. Obwohl in VB13 ein anspruchsgemäßes Polyamid verwendet wurde, konnten nur schlechte Werte für die Kerbschlagzähigkeit erreicht werden. Weiterhin war die erhaltene Polyamid-Formmasse zwar extrudierbar, wies jedoch Fehlstellen (Pickel) in der Oberfläche auf.

## Patentansprüche

1. Polyamid-Formmasse enthaltend die folgenden Komponenten (A) bis (D) oder bestehend aus diesen Komponenten:
(A) 55 bis 88,9 Gew.-% mindestens eines Polyamids ausgewählt aus der Gruppe bestehend aus PA 516, PA 616, PA 1016 und Mischungen daraus; wobei dieses eine in m-Kresol bestimmte relative Viskosität, bestimmt gemäß ISO 307 (2007) bei 20 °, im Bereich von 1,8 bis 2,5 aufweist und der Gehalt der Aminoendgruppen im Bereich von 25 bis 110 mmol/kg liegt;
(B) 5 bis 25 Gew.-% mindestens eines Polyamids ausgewählt aus der Gruppe bestehend aus PA 11, PA 12, PA 416, PA 516, PA 69, PA 610, PA 612, PA 614, PA 616, PA 618, PA 816, PA 1010, PA 1012, PA 1014, PA 1016, PA 1018, PA 1212, PA 1216, PA 1218 und Mischungen hiervon; wobei dieses eine in m-Kresol bestimmte relative Viskosität, bestimmt gemäß ISO 307 (2007) bei 20 °C, im Bereich von 1,4 bis 1,75 aufweist und der Gehalt der Aminoendgruppen im Bereich von 80 bis 175 mmol/kg liegt;
(C) 6 bis 22 Gew.-% mindestens eines funktionalisierten Schlagzähmodifikators ausgewählt aus der Gruppe bestehend aus Polyolefin-Copolymeren, Styrol-Copolymeren, Styrol-Blockcopolymeren, ionischen Ethylen-Copolymeren mit Säuregruppen, wobei diese zumindest teilweise durch Metallionen neutralisiert sind und Mischungen hiervon;
(D) 0,1 bis 20 Gew.-% mindestens eines Zusatzstoffes;
wobei sich die Mengenanteile der Komponenten (A) bis (D) in Summe auf 100 Gew.-% ergänzen.

2. Polyamid-Formmasse gemäß Anspruch 1, **dadurch gekennzeichnet, dass**
der Anteil von Komponente (A) in der Polyamid-Formmasse im Bereich von 58 bis 83,7 Gew.-% und bevorzugt von 60 bis 79,5 Gew.-% bezogen auf das Gesamtgewicht der Polyamid-Formmasse liegt; und/oder
der Anteil von Komponente (B) in der Polyamid-Formmasse im Bereich von 8 bis 20 Gew.-% und bevorzugt von 10 bis 20 Gew.-% bezogen auf das Gesamtgewicht der Polyamid-Formmasse liegt; und/oder
der Anteil von Komponente (C) in der Formmasse im Bereich von 8 bis 20 Gew.-% und bevorzugt von 10 bis 20 Gew.-% bezogen auf das Gesamtgewicht der Polyamid-Formmasse liegt; und/oder
der Anteil von Komponente (D) in der Formmasse im Bereich von 0,1 bis 10 Gew.-%, bevorzugt von 0,3 bis 6 Gew.-% und besonders bevorzugt von 0,5 bis 4 Gew.-% bezogen auf das Gesamtgewicht der Polyamid-Formmasse liegt.

3. Polyamid-Formmasse gemäß Anspruch 1 oder 2, **dadurch gekennzeichnet, dass**
das Gewichtsverhältnis von Komponente (A) zu Komponente (B) im Bereich von 95 : 5 bis 60 : 40, bevorzugt von 85 : 15 bis 70 : 30 und besonders bevorzugt von 80 : 20 bis 72 : 28 liegt, jeweils bezogen auf 100 Gewichtsteile als Summe aus (A) und (B).

4. Polyamid-Formmasse gemäß einem der vorhergehenden Ansprüche, **dadurch gekennzeichnet, dass**
Komponente (A) eine in m-Kresol bestimmte relative Viskosität, bestimmt gemäß ISO 307 (2007) bei 20 °C, im Bereich von 1,8 bis 2,5, bevorzugt von 1,90 bis 2,30 und besonders bevorzugt 1,95 bis 2,25 aufweist; und/oder
der Gehalt der Aminoendgruppen von Komponente (A) im Bereich von 25 bis 100 mmol/kg, bevorzugt von 30 bis 95 mmol/kg und besonders bevorzugt von 40 bis 90 mmol/kg liegt; und/oder Komponente (B) eine in m-Kresol bestimmte relative Viskosität, bestimmt gemäß ISO 307 (2007) bei 20 °C, im Bereich von 1,45 bis 1,70 und bevorzugt von 1,50 bis 1,67 aufweist; und/oder der Gehalt der Aminoendgruppen von Komponente (B) im Bereich von 85 bis 150 mmol/kg und bevorzugt von 90 bis 125 mmol/kg liegt.

5. Polyamid-Formmasse gemäß einem der vorhergehenden Ansprüche, **dadurch gekennzeichnet, dass**
die Komponente (A) ausgewählt ist aus der Gruppe bestehend aus PA 616, PA 1016 und Mischungen hiervon; und/oder
die Komponente (B) ausgewählt ist aus der Gruppe bestehend aus PA 11, PA 12, PA 69, PA 610, PA 612, PA 616, PA 1010, PA 1012, PA 1014, PA 1016, PA 1018, PA 1212 und Mischungen hiervon.

6. Polyamid-Formmasse gemäß einem der vorhergehenden Ansprüche, **dadurch gekennzeichnet, dass**
die Funktionalisierung von Komponente (C) durch Copolymerisation und/oder durch Pfropfen, bevorzugt mit einer Verbindung ausgewählt aus der Gruppe bestehend aus ungesättigten Carbonsäuren, ungesättigten Carbonsäurederivaten und Mischungen hiervon und/oder ungesättigten Glycidylverbindungen erfolgt; die besonders bevorzugt ausgewählt sind aus der Gruppe bestehend aus ungesättigten Carbonsäureestern, insbesondere Acrylsäureestern und/oder Methacrylsäureestern, ungesättigten Carbonsäureanhydriden, insbesondere Maleinsäureanhydrid, Glycidylacrylsäure, Glycidylmethacrylsäure, α-Ethylacrylsäure, Maleinsäure, Fumarsäure, Itaconsäure, Citraconsäure, Aconitsäure, Tetrahydrophthalsäure, Butenylsuccinsäure und Mischungen hiervon; wobei
wenn die Funktionalisierung durch Copolymerisation erfolgt der Gewichtsanteil jeder einzelnen zur Funktionalisierung eingesetzten Verbindung bevorzugt im Bereich von 3 bis 25 Gew.-%, besonders bevorzugt von 4 bis 20 Gew.-% und insbesondere bevorzugt von 4,5 bis 15 Gew.-%, jeweils bezogen auf das Gesamtgewicht von Komponente (C), beträgt; und
wenn die Funktionalisierung durch Pfropfung erfolgt der Gewichtsanteil jeder einzelnen zur Funktionalisierung eingesetzten Verbindung bevorzugt im Bereich von 0,3 bis 2,5 Gew.-%, besonders bevorzugt von 0,4 bis 2,0 Gew.-% und insbesondere bevorzugt von 0,5 bis 1,9 Gew.-%, jeweils bezogen auf das Gesamtgewicht von Komponente (C), beträgt.

7. Polyamid-Formmasse gemäß einem der vorhergehenden Ansprüche, **dadurch gekennzeichnet, dass**
Komponente (C) aus mindestens einem Polyolefin-Copolymeren gebildet wird, welches bevorzugt ausgewählt ist aus der Gruppe bestehend aus Ethylen-α-Olefin-Copolymeren, insbesondere linearen Polyethylenen mit mittleren Dichten im Bereich von 0,941 bis 0,950 g/cm³ (PE-LMD), linearen Polyethylene mit niedrigen Dichten im Bereich von 0,911 bis 0,940 g/cm³ (PE-LLD), linearen Polyethylene mit sehr niedrigen Dichten im Bereich von 0,900 bis 0,910 g/cm³ (PE-VLD), linearen Polyethylene mit ultraniedrigen Dichten im Bereich von 0,860 bis 0,899 g/cm³ (PE-ULD) und Ethylen-l-Buten-Copolymeren, Propylen-α-Olefin-Copolymeren, Ethylen-Propylen-Copolymeren, Ethylen-Propylen-Dien-Copolymeren und deren Mischungen, wobei die α-Olefine besonders bevorzugt 3 bis 18 Kohlenstoffatome besitzen und insbesondere bevorzugt ausgewählt sind aus der Gruppe bestehend aus Propen, 1-Buten, 1-Penten, 1-Hexen, 1-Octen, 1-Decen 1-Dodecen und Mischungen davon; und/oder
Komponente (C) aus mindestens einem Styrol-Copolymeren gebildet wird, welches bevorzugt ein Styrol-Copolymer mit einem Co-Monomer ausgewählt aus der Gruppe bestehend Butadien, Isopren und Acrylat und Mischungen davon ist; und/oder
Komponente (C) aus mindestens einem Styrol-Blockcopolymeren gebildet wird, welches bevorzugt ausgewählt ist aus der Gruppe bestehend aus Styrol-Butadien-Styrol-Triblockcopolymeren (SBS), Styrol-Isopren-Styrol-Triblockcopolymeren (SIS), Styrol-Ethylen/Butylen-Styrol-Triblockcopolymeren (SEBS) und Styrol-Ethylen/Popylen-Styrol-Triblockcopolymeren (SEPS) und Mischungen davon; und/oder
Komponente (C) aus mindestens einem ionischen Ethylen-Copolymeren gebildet wird, welches bevorzugt aus Monomeren aufgebaut wird, die ausgewählt sind aus der Gruppe bestehend aus Ethylen, Propylen, Butylen, Acrylsäure, Acrylat, Methacrylsäure, Methacrylat und Mischungen davon in denen die Säuregruppen teilweise mit Metallionen neutralisiert sind, besonders bevorzugt sind Ethylen-Methacrylsäure-Copolymere oder Ethylen-Methacrylsäure-AcrylatCopolymere in denen die Säuregruppen teilweise mit Metallionen neutralisiert sind.

8. Polyamid-Formmasse gemäß einem der vorhergehenden Ansprüche, **dadurch gekennzeichnet, dass**
die Komponente (A) PA 616 ist; und
die Komponente (B) ausgewählt ist aus der Gruppe bestehend aus PA 12, PA 616, PA 1016 und Mischungen davon; und
die Komponente (C) ausgewählt ist aus der Gruppe bestehend aus Ethylen-Propylen-Copolymeren, Ethylen-1-Buten-Copolymeren, Ethylen-Propylen-1-Buten-Copolymeren, Stryol-Copolymeren, Styrol-Blockcopolymeren und Mischungen davon.

9. Polyamid-Formmasse gemäß einem der vorhergehenden Ansprüche, **dadurch gekennzeichnet, dass**
die Komponente (A) PA 616 ist; und
die Komponente (B) ausgewählt ist aus der Gruppe bestehend aus PA 12, PA 616, PA 1016 und Mischungen davon; und
die Komponente (C) ausgewählt ist aus der Gruppe bestehend aus Ethylen-Propylen-Copolymeren, Ethylen-1-Buten-Copolymeren, Styrol-Blockcopolymeren und Mischungen davon.

10. Polyamid-Formmasse gemäß einem der vorhergehenden Ansprüche, **dadurch gekennzeichnet, dass**
die Komponente (A) PA 616 ist; und
Komponenten (B) mindestens zwei Polyamide ausgewählt aus der Gruppe bestehend aus PA 12, PA 616 und PA 1016 sind; und
die Komponente (C) ausgewählt ist aus der Gruppe bestehend aus Ethylen-Propylen-Copolymeren, Ethylen-1-Buten-Copolymeren, Ethylen-Propylen-1-Buten-Copolymeren, Stryol-Copolymeren, Styrol-Blockcopolymeren und Mischungen davon.

11. Polyamid-Formmasse gemäß einem der vorhergehenden Ansprüche, **dadurch gekennzeichnet, dass**
Komponente (A) und Komponente (B) jeweils PA 616 ist; oder
Komponente (A) PA 616 und Komponente (B) PA 1016 ist; oder
Komponente (A) PA 616 und Komponente (B) PA 12 ist; oder
Komponente (A) PA 616 ist und Komponente (B) PA 616 und PA 12 ist; oder
Komponente (A) PA 1016 und Komponente (B) jeweils PA 1016 ist; oder
Komponente (A) PA 1016 und Komponente (B) PA 616 ist; oder
Komponente (A) PA 616 ist, Komponente (B) PA 616 ist und Komponente (C) ausgewählt ist aus der Gruppe bestehend aus Ethylen-Propylen-Copolymeren, Ethylen-1-Buten-Copolymeren oder Ethylen-Propylen-1-Buten-Copolymeren und Mischungen davon; oder
Komponente (A) PA 616 ist, die Komponente (B) PA 616 und PA 12 ist und Komponente (C) ausgewählt ist aus der Gruppe bestehend aus Ethylen-Propylen-Copolymerne, Ethylen-1-Buten-Copolymeren, Ethylen-Propylen-1-Buten-Copolymeren und Mischungen davon; oder
Komponente (A) PA 616, Komponente (B) PA 616 und Komponente (C) ein Stryol-Copolymer oder Styrol-Blockcopolymer ist; oder Komponente (A) PA 616, Komponente (B) PA 1016 und Komponente (C) ausgewählt ist aus der Gruppe bestehend aus Ethylen-Propylen-Copolymeren, Ethylen-1-Buten-Copolymeren, Ethylen-Propylen-1-Buten-Copolymeren und Mischungen davon; oder
Komponente (A) PA 1016, Komponente (B) PA 1016 und Komponente (C) ausgewählt ist aus der Gruppe bestehend aus Ethylen-Propylen-Copolymeren, Ethylen-1-Buten-Copolymeren, Ethylen-Propylen-1-Buten-Copolymeren und Mischungen davon.

12. Polyamid-Formmasse gemäß einem der vorhergehenden Ansprüche, **dadurch gekennzeichnet, dass**
die Zusatzstoffe (D) ausgewählt sind aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Kondensationskatalysatoren, Kettenreglern, Entschäumern, Antiblockmitteln, kettenverlängernden Additiven, optischen Aufhellern, IR-Absorbern, NIR-Absorbern, halogenhaltigen Flammschutzmitteln, halogenfreien Flammschutzmitteln, unfunktionalisierten Schlagzähmodifikatoren, natürlichen Schichtsilikaten, synthetischen Schichtsilikaten, metallischen Pigmenten, Metallflittern, metallbeschichteten Partikeln, teilchenförmigen Füllstoffen, faserförmigen Füllstoffen, nanoskaligen Füllstoffen mit einem Partikeldurchmesser (*d₉₅*) von maximal 100 nm, bestimmt mittels Laserbeugung nach ISO 13320 (2009) und Mischungen davon.

13. Polyamid-Formmasse gemäß einem der vorhergehenden Ansprüche, **dadurch gekennzeichnet, dass**
die Polyamid-Formmasse genau ein Polyamid als Komponente (A) und genau ein Polyamid als Komponente (B) enthält.

14. Polyamid-Formmasse gemäß einem der vorhergehenden Ansprüche, **dadurch gekennzeichnet, dass** ein aus der Polyamid-Formmasse hergestellter Prüfkörper
eine Reißdehnung bestimmt nach ISO 527 von mindestens 200 %, bevorzugt mindestens 220 % und besonders bevorzugt mindestens 250 % aufweist; und/oder
einen Zug-E-Modul bestimmt nach ISO 527 von mindestens 900 MPa, bevorzugt mindestens 1000 MPa und besonders bevorzugt mindestens 1100 MPa aufweist; und/oder
eine Charpy-Kerbschlagzähigkeit bei 23°C bestimmt nach ISO 179/2eA von mindestens 75 kJ/m², bevorzugt mindestens 80 kJ/m² und besonders bevorzugt mindestens 90 kJ/m² aufweist;
eine Charpy-Kerbschlagzähigkeit bei -40°C bestimmt nach ISO 179/2eA von mindestens 15 kJ/m², bevorzugt mindestens 20 kJ/m² und besonders bevorzugt mindestens 21 kJ/m² aufweist.

15. Formkörper herstellbar aus einer Polyamid-Formmasse nach einem der Ansprüche 1 bis 14.

16. Formkörper nach Anspruch 15 **dadurch gekennzeichnet, dass**
der Formkörper ausgewählt ist aus der Gruppe bestehend aus mittels Extrusion geformten Leitungen , insbesondere Kühlleitungen für Motoren oder Batterien, Heizleitungen, bevorzugt im Innenraum von Gebäuden, Entlüftungsleitungen für das Kurbelgehäuse und Harnstoffleitungen und Behältern.

## Claims

1. A polyamide molding compound comprising the following components (A) to (D) or consisting of said components:
(A) 55 to 88.9% by weight of at least one polyamide selected from the group consisting of PA 516, PA 616, PA 1016 and mixtures thereof; this having a relative viscosity, determined in m-cresol, determined according to ISO 307 (2007) at 20°, in the range from 1.8 to 2.5 and the content of amino end groups being in the range from 25 to 110 mmol/kg;
(B) 5 to 25% by weight of at least one polyamide selected from the group consisting of PA 11, PA 12, PA 416, PA 516, PA 69, PA 610, PA 612, PA 614, PA 616, PA 618, PA 816, PA 1010, PA 1012, PA 1014, PA 1016, PA 1018, PA 1212, PA 1216, PA 1218 and mixtures thereof; this having a relative viscosity, determined in m-cresol, determined according to ISO 307 (2007) at 20°C, in the range from 1.4 to 1.75 and the content of the amino end groups lying in the range from 80 to 175 mmol/kg;
(C) 6 to 22% by weight of at least one functionalized impact modifier selected from the group consisting of polyolefin copolymers, styrene copolymers, styrene block copolymers, ionic ethylene copolymers with acid groups, these being at least partially neutralized by metal ions and mixtures thereof;
(D) 0.1 to 20% by weight of at least one additive;
the quantity proportions of components (A) to (D) totaling 100% by weight.

2. The polyamide molding compound according to claim 1, **characterized in that**
the proportion of component (A) in the polyamide molding compound is in the range from 58 to 83.7% by weight and preferably from 60 to 79.5% by weight based on the total weight of the polyamide molding compound; and/or
the proportion of component (B) in the polyamide molding compound is in the range from 8 to 20% by weight and preferably from 10 to 20% by weight based on the total weight of the polyamide molding compound; and/or
the proportion of component (C) in the molding compound is in the range from 8 to 20% by weight and preferably from 10 to 20% by weight based on the total weight of the polyamide molding compound; and/or
the proportion of component (D) in the molding compound is in the range from 0.1 to 10% by weight, preferably from 0.3 to 6% by weight and particularly preferably from 0.5 to 4% by weight, based on the total weight of the polyamide molding compound.

3. The polyamide molding compound according to claim 1 or 2, **characterized in that**
the weight ratio of component (A) to component (B) is in the range from 95:5 to 60:40, preferably from 85:15 to 70:30 and particularly preferably from 80:20 to 72:28, each based on 100 parts by weight as the sum of (A) and (B).

4. The polyamide molding compound according to any one of the preceding claims, **characterized in that**
component (A) has a relative viscosity determined in m-cresol, determined according to ISO 307 (2007) at 20°C, in the range from 1.8 to 2.5, preferably from 1.90 to 2.30 and particularly preferably 1.95 to 2.25; and/or
the content of the amino end groups of component (A) is in the range from 25 to 100 mmol/kg, preferably from 30 to 95 mmol/kg and particularly preferably from 40 to 90 mmol/kg; and/or
component (B) has a relative viscosity determined in m-cresol, determined according to ISO 307 (2007) at 20°C, in the range from 1.45 to 1.70 and preferably from 1.50 to 1.67; and/or
the content of the amino end groups of component (B) is in the range from 85 to 150 mmol/kg and preferably from 90 to 125 mmol/kg.

5. The polyamide molding compound according to any one of the preceding claims, **characterized in that**
the component (A) is selected from the group consisting of PA 616, PA 1016 and mixtures thereof; and/or
the component (B) is selected from the group consisting of PA 11, PA 12, PA 69, PA 610, PA 612, PA 616, PA 1010, PA 1012, PA 1014, PA 1016, PA 1018, PA 1212 and mixtures thereof.

6. The polyamide molding compound according to any one of the preceding claims, **characterized in that**
component (C) is functionalized by copolymerization and/or by grafting, preferably with a compound selected from the group consisting of unsaturated carboxylic acids, unsaturated carboxylic acid derivatives and mixtures thereof and/or unsaturated glycidyl compounds; which are particularly preferably selected from the group consisting of unsaturated carboxylic acid esters, in particular acrylic acid esters and/or methacrylic acid esters, unsaturated carboxylic acid anhydrides, in particular maleic anhydride, glycidylacrylic acid, glycidylmethacrylic acid, α-ethylacrylic acid, maleic acid, fumaric acid, itaconic acid, citraconic acid, aconitic acid, tetrahydrophthalic acid, butenylsuccinic acid and mixtures thereof; wherein
if the functionalization is carried out by copolymerization, the proportion by weight of each individual compound used for the functionalization is preferably in the range from 3 to 25% by weight, particularly preferably from 4 to 20% by weight and particularly preferably from 4.5 to 15% by weight, each based on the total weight of component (C); and
if the functionalization takes place by grafting, the proportion by weight of each individual compound used for the functionalization is preferably in the range from 0.3 to 2.5% by weight, particularly preferably from 0.4 to 2.0% by weight and particularly preferably from 0.5 to 1.9% by weight, based in each case on the total weight of component (C).

7. The polyamide molding compound according to any one of the preceding claims, **characterized in that**
component (C) is formed from at least one polyolefin copolymer, which is preferably selected from the group consisting of ethylene-α-olefin copolymers, in particular linear polyethylenes having average densities in the range from 0.941 to 0.950 g/cm³ (PE-LMD), linear polyethylenes having low densities in the range from 0.911 to 0.940 g/cm³ (PE-LLD), linear polyethylenes having very low densities in the range from 0.900 to 0.910 g/cm³ (PE-VLD), linear polyethylenes having ultra-low densities in the range from 0.860 to 0.899 g/cm³ (PE-ULD) and ethylene-1-butene copolymers, propylene-α-olefin copolymers, ethylene-propylene copolymers, ethylene-propylene-diene copolymers and mixtures thereof, wherein the α-olefins particularly preferably have 3 to 18 carbon atoms and are particularly preferably selected from the group consisting of propene, 1-butene, 1-pentene, 1-hexene, 1-octene, 1-decene, 1-dodecene and mixtures thereof; and/or
component (C) is formed from at least one styrene copolymer, which is preferably a styrene copolymer with a comonomer selected from the group consisting of butadiene, isoprene and acrylate and mixtures thereof; and/or
component (C) is formed from at least one styrene block copolymer, which is preferably selected from the group consisting of styrene-butadiene-styrene triblock copolymers (SBS), styreneisoprene-styrene triblock copolymers (SIS), styrene-ethylene/butylene-styrene triblock copolymers (SEBS) and styrene-ethylene/propylene-styrene triblock copolymers (SEPS) and mixtures thereof; and/or
component (C) is formed from at least one ionic ethylene copolymer, which is preferably built up from monomers selected from the group consisting of ethylene, propylene, butylene, acrylic acid, acrylate, methacrylic acid, methacrylate and mixtures thereof in which the acid groups are partially neutralized with metal ions, ethylene-methacrylic acid copolymers or ethylene-methacrylic acid-acrylate copolymers in which the acid groups are partially neutralized with metal ions being particularly preferred.

8. The polyamide molding compound according to any one of the preceding claims, **characterized in that**
the component (A) is PA 616; and
the component (B) is selected from the group consisting of PA 12, PA 616, PA 1016 and mixtures thereof; and
the component (C) is selected from the group consisting of ethylene-propylene copolymers, ethylene-1-butene copolymers, ethylene-propylene-1-butene copolymers, styrene copolymers, styrene block copolymers, and mixtures thereof.

9. The polyamide molding compound according to any one of the preceding claims, **characterized in that**
the component (A) is PA 616; and
the component (B) is selected from the group consisting of PA 12, PA 616, PA 1016 and mixtures thereof; and
the component (C) is selected from the group consisting of ethylene-propylene copolymers, ethylene-1-butene copolymers, styrene block copolymers, and mixtures thereof.

10. The polyamide molding compound according to any one of the preceding claims, **characterized in that**
the component (A) is PA 616; and
components (B) are at least two polyamides selected from the group consisting of PA 12, PA 616 and PA 1016; and
the component (C) is selected from the group consisting of ethylene-propylene copolymers, ethylene-1-butene copolymers, ethylene-propylene-1-butene copolymers, styrene copolymers, styrene block copolymers, and mixtures thereof.

11. The polyamide molding compound according to any one of the preceding claims, **characterized in that**
component (A) and component (B) are each PA 616; or
component (A) is PA 616 and component (B) is PA 1016; or
component (A) is PA 616 and component (B) is PA 12; or
component (A) is PA 616 and component (B) is PA 616 and PA 12; or
component (A) is PA 1016 and component (B) is each PA 1016; or
component (A) is PA 1016 and component (B) is PA 616; or
component (A) is PA 616, component (B) is PA 616 and component (C) is selected from the group consisting of ethylene-propylene copolymers, ethylene-1-butene copolymers or ethylene-propylene-1-butene copolymers and mixtures thereof; or
component (A) is PA 616, the component (B) is PA 616 and PA 12, and component (C) is selected from the group consisting of ethylene-propylene copolymers, ethylene-1-butene copolymers, ethylene-propylene-1-butene copolymers and mixtures thereof; or
component (A) is PA 616, component (B) is PA 616 and component (C) is a styrene copolymer or styrene block copolymer; or
component (A) PA 616, component (B) PA 1016 and component (C) is selected from the group consisting of ethylene-propylene copolymers, ethylene-1-butene copolymers, ethylene-propylene-1-butene copolymers and mixtures thereof; or
component (A) PA 1016, component (B) PA 1016 and component (C) is selected from the group consisting of ethylene-propylene copolymers, ethylene-1-butene copolymers, ethylene-propylene-1-butene copolymers and mixtures thereof.

12. The polyamide molding compound according to any one of the preceding claims, **characterized in that**
the additives (D) are selected from the group consisting of inorganic and/organic stabilizers, in particular antioxidants, antiozonants, light stabilizers, in particular UV stabilizers, UV absorbers or UV blockers, lubricants, dyes, marking agents, pigments, carbon black, graphite, graphene, carbon nanotubes, photochromic agents, antistatic agents, mold release agents, condensation catalysts, chain regulators, defoamers, antiblocking agents, chain-extending additives, optical brighteners, IR absorbers, NIR absorbers, halogen-containing flame retardants, halogen-free flame retardants, unfunctionalized impact modifiers, natural layered silicates, synthetic layered silicates, metallic pigments, metal flakes, metal-coated particles, particulate fillers, fibrous fillers, nanoscale fillers having a maximum particle diameter (c/95) of 100 nm, determined by means of laser diffraction according to ISO 13320 (2009) and mixtures thereof.

13. The polyamide molding compound according to any one of the preceding claims, **characterized in that**
the polyamide molding compound contains precisely one polyamide as component (A) and precisely one polyamide as component (B).

14. The polyamide molding compound according to any one of the preceding claims, **characterized in that** a test specimen produced from the polyamide molding compound
has an elongation at break determined according to ISO 527 of at least 200%, preferably at least 220% and particularly preferably at least 250%; and/or
has a tensile modulus of elasticity determined according to ISO 527 of at least 900 MPa, preferably at least 1000 MPa and particularly preferably at least 1100 MPa; and/or
has a Charpy notched impact strength at 23°C, determined according to ISO 179/2eA, of at least 75 kJ/m², preferably at least 80 kJ/m² and particularly preferably at least 90 kJ/m²;
has a Charpy notched impact strength at -40°C, determined according to ISO 179/2eA, of at least 15 kJ/m², preferably at least 20 kJ/m² and particularly preferably at least 21 kJ/m².

15. A molding that can be produced from a polyamide molding compound according to any one of claims 1 to 14.

16. The molding according to claim 15, **characterized in that**
the molding is selected from the group consisting of lines formed by means of extrusion, in particular cooling lines for engines or batteries, heating lines, preferably in the interior of buildings, ventilation lines for the crankcase and urea lines and containers.

## Revendications

1. Matière à mouler en polyamide contenant les composants (A) à (D) suivants ou constituée de ces composants :
(A) 55 à 88,9 % en poids d'au moins un polyamide choisi dans le groupe constitué par le PA 516, PA 616, PA 1016 et leurs mélanges ; dans laquelle celui-ci présente une viscosité relative déterminée en m-crésol, déterminée selon la norme ISO 307 (2007) à 20 °, dans la plage de 1,8 à 2,5 et la teneur en groupes terminaux amino se situe dans la plage de 25 à 110 mmol/kg ;
(B) 5 à 25 % en poids d'au moins un polyamide choisi dans le groupe constitué par le PA 11, PA 12, PA 416, PA 516, PA 69, PA 610, PA 612, PA 614, PA 616, PA 618, PA 816, PA 1010, PA 1012, PA 1014, PA 1016, PA 1018, PA 1212, PA 1216, PA 1218 et leurs mélanges ; dans laquelle celui-ci présente une viscosité relative déterminée en m-crésol, déterminée selon la norme ISO 307 (2007) à 20 °C, dans la plage de 1,4 à 1,75 et la teneur en groupes terminaux amino se situe dans la plage de 80 à 175 mmol/kg ;
(C) 6 à 22 % en poids d'au moins un modifiant choc fonctionnalisé choisi dans le groupe constitué par les copolymères de polyoléfine, les copolymères de styrène, les copolymères séquencés de styrène, les copolymères ioniques d'éthylène avec des groupes acides, dans laquelle ceux-ci sont au moins partiellement neutralisés par des ions métalliques, et leurs mélanges ;
(D) 0,1 à 20 % en poids d'au moins un additif ;
dans laquelle les fractions des composants (A) à (D) se complètent à 100 % en poids.

2. Matière à mouler en polyamide selon la revendication 1, **caractérisée en ce que**
le pourcentage du composant (A) dans la matière à mouler en polyamide se situe dans la plage de 58 à 83,7 % en poids et de préférence de 60 à 79,5 % en poids par rapport au poids total de la matière à mouler en polyamide ; et/ou
le pourcentage du composant (B) dans la matière à mouler en polyamide se situe dans la plage de 8 à 20 % en poids et de préférence de 10 à 20 % en poids par rapport au poids total de la matière à mouler en polyamide ; et/ou
le pourcentage du composant (C) dans la matière à mouler se situe dans la plage de 8 à 20 % en poids et de préférence de 10 à 20 % en poids par rapport au poids total de la matière à mouler en polyamide ; et/ou
le pourcentage du composant (D) dans la matière à mouler se situe dans la plage de 0,1 à 10 % en poids, de préférence de 0,3 à 6 % en poids et de préférence encore de 0,5 à 4 % en poids par rapport au poids total de la matière à mouler en polyamide.

3. Matière à mouler en polyamide selon la revendication 1 ou 2, **caractérisée en ce que**
le rapport pondéral du composant (A) au composant (B) se situe dans la plage de 95 : 5 à 60 : 40, de préférence de 85 : 15 à 70 : 30 et, de préférence encore de 80 : 20 à 72 : 28, respectivement par rapport à 100 parties en poids en tant que somme de (A) et (B).

4. Matière à mouler en polyamide selon l'une quelconque des revendications précédentes, **caractérisée en ce que**
le composant (A) présente une viscosité relative déterminée dans le m-crésol, déterminée selon la norme ISO 307 (2007) à 20 °C, dans la plage de 1,8 à 2,5, de préférence de 1,90 à 2,30 et de préférence encore de 1,95 à 2,25 ; et/ou
la teneur en groupes terminaux amino du composant (A) se situe dans la plage de 25 à 100 mmol/kg, de préférence de 30 à 95 mmol/kg et de préférence encore de 40 à 90 mmol/kg ; et/ou
le composant (B) présente une viscosité relative déterminée dans le m-crésol, déterminée selon la norme ISO 307 (2007) à 20 °C, dans la plage de 1,45 à 1,70 et de préférence de 1,50 à 1,67 ; et/ou
la teneur en groupes terminaux amino du composant (B) se situe dans la plage de 85 à 150 mmol/kg et de préférence de 90 à 125 mmol/kg.

5. Matière à mouler en polyamide selon l'une quelconque des revendications précédentes, **caractérisée en ce que**
le composant (A) est choisi dans le groupe constitué par le PA 616, PA 1016 et leurs mélanges ; et/ou
le composant (B) est choisi dans le groupe constitué par le PA 11, PA 12, PA 69, PA 610, PA 612, PA 616, PA 1010, PA 1012, PA 1014, PA 1016, PA 1018, PA 1212 et leurs mélanges.

6. Matière à mouler en polyamide selon l'une quelconque des revendications précédentes, **caractérisée en ce que**
la fonctionnalisation du composant (C) s'effectue par copolymérisation et/ou par greffage, de préférence avec un composé choisi dans le groupe constitué par les acides carboxyliques insaturés, les dérivés d'acides carboxyliques insaturés et leurs mélanges et/ou les composés glycidyliques insaturés ; qui sont de préférence encore choisis dans le groupe constitué par les esters d'acides carboxyliques insaturés, en particulier les esters d'acide acrylique et/ou esters d'acide méthacrylique, les anhydrides d'acides carboxyliques insaturés, en particulier l'anhydride maléique, l'acide glycidylacrylique, l'acide glycidylméthacrylique, l'acide α-éthylacrylique, l'acide maléique, l'acide fumarique, l'acide itaconique, l'acide citraconique, l'acide aconitique, l'acide tétrahydrophtalique, l'acide buténylsuccinique et leurs mélanges ; dans lequel
lorsque la fonctionnalisation s'effectue par copolymérisation, le pourcentage en poids de chaque composé individuel utilisé pour la fonctionnalisation est de préférence dans la plage de 3 à 25 % en poids, de préférence encore de 4 à 20 % en poids et de manière particulièrement préférée de 4,5 à 15 % en poids, respectivement par rapport au poids total du composant (C) ; et
lorsque la fonctionnalisation s'effectue par greffage, le pourcentage en poids de chaque composé individuel utilisé pour la fonctionnalisation est de préférence dans la plage de 0,3 à 2,5 % en poids, de préférence encore de 0,4 à 2,0 % en poids et de manière particulièrement préférée de 0,5 à 1,9 % en poids, respectivement par rapport au poids total du composant (C).

7. Matière à mouler en polyamide selon l'une quelconque des revendications précédentes, **caractérisée en ce que**
le composant (C) est formé d'au moins un copolymère de polyoléfine, lequel est de préférence choisi dans le groupe constitué par les copolymères éthylène-α-oléfine, en particulier les polyéthylènes linéaires avec des densités moyennes dans la plage de 0,941 à 0,950 g/cm³ (PE-LMD), les polyéthylènes linéaires avec des densités faibles dans la plage de 0,911 à 0,940 g/cm³ (PE-LLD), les polyéthylènes linéaires avec des densités ultra-faibles dans la plage de 0,900 à 0,910 g/cm³ (PE-VLD), les polyéthylènes linéaires à très faible densité dans la plage de 0,860 à 0,899 g/cm³ (PE-ULD) et les copolymères éthylène-1-butène, les copolymères propylène-α-oléfine, les copolymères éthylène-propylène, les copolymères éthylène-propylène-diène et leurs mélanges, dans laquelle les α-oléfines possèdent de préférence encore 3 à 18 atomes de carbone et sont de manière particulièrement préférée choisies dans le groupe constitué par le propène, le 1-butène, le 1-pentène, le 1-hexène, le 1-octène, le 1-décène, le 1-dodécène et leurs mélanges ; et/ou
le composant (C) est formé d'au moins un copolymère de styrène, lequel est de préférence un copolymère de styrène avec un co-monomère choisi dans le groupe constitué par le butadiène, l'isoprène et l'acrylate et leurs mélanges ; et/ou
le composant (C) est formé d'au moins un copolymère séquencé de styrène, lequel est de préférence choisi dans le groupe constitué par les copolymères triséquencés styrène-butadiène-styrène (SBS), les copolymères triséquencés styrène-isoprène-styrène (SIS), les copolymères triséquencés styrène-éthylène/butylène-styrène (SEBS) et les copolymères triséquencés styrène-éthylène/propylène-styrène (SEPS) et leurs mélanges ; et/ou
le composant (C) est formé d'au moins un copolymère ionique d'éthylène, lequel est de préférence composé de monomères qui sont choisis dans le groupe constitué par l'éthylène, le propylène, le butylène, l'acide acrylique, l'acrylate, l'acide méthacrylique, le méthacrylate et leurs mélanges, dans lesquels les groupes acides sont partiellement neutralisés avec des ions métalliques, de préférence encore des copolymères éthylène-acide méthacrylique ou des copolymères éthylène-acide méthacrylique-acrylate dans lesquels les groupes acides sont partiellement neutralisés avec des ions métalliques.

8. Matière à mouler en polyamide selon l'une quelconque des revendications précédentes, **caractérisée en ce que**
le composant (A) est le PA 616 ; et
le composant (B) est choisi dans le groupe constitué par le PA 12, PA 616, PA 1016 et leurs mélanges ; et
le composant (C) est choisi dans le groupe constitué par les copolymères éthylène-propylène, les copolymères éthylène-1-butène, les copolymères éthylène-propylène-1-butène, les copolymères de styrène, les copolymères séquencés de styrène et leurs mélanges.

9. Matière à mouler en polyamide selon l'une quelconque des revendications précédentes, **caractérisée en ce que**
le composant (A) est le PA 616 ; et
le composant (B) est choisi dans le groupe constitué par le PA 12, PA 616, PA 1016 et leurs mélanges ; et
le composant (C) est choisi dans le groupe constitué par les copolymères éthylène-propylène, les copolymères éthylène-1-butène, les copolymères séquencés de styrène et leurs mélanges.

10. Matière à mouler en polyamide selon l'une quelconque des revendications précédentes, **caractérisée en ce que**
le composant (A) est le PA 616 ; et
les composants (B) sont au moins deux polyamides choisis dans le groupe constitué par le PA 12, PA 616 et PA 1016 ; et
le composant (C) est choisi dans le groupe constitué par les copolymères éthylène-propylène, les copolymères éthylène-1-butène, les copolymères éthylène-propylène-1-butène, les copolymères de styrène, les copolymères séquencés de styrène et leurs mélanges.

11. Matière à mouler en polyamide selon l'une quelconque des revendications précédentes, **caractérisée en ce que**
le composant (A) et le composant (B) sont respectivement le PA 616 ; ou
le composant (A) est le PA 616 et le composant (B) le PA 1016 ; ou
le composant (A) est le PA 616 et le composant (B) le PA 12 ; ou
le composant (A) est le PA 616 et le composant (B) est le PA 616 et le PA 12 ; ou
le composant (A) est le PA 1016 et le composant (B) respectivement le PA 1016 ; ou
le composant (A) est le PA 1016 et le composant (B) le PA 616 ; ou
le composant (A) est le PA 616, le composant (B) est le PA 616 et le composant (C) est choisi dans le groupe constitué par les copolymères éthylène-propylène, les copolymères éthylène-1-butène ou les copolymères éthylène-propylène-1-butène et leurs mélanges ; ou
le composant (A) est le PA 616, le composant (B) est le PA 616 et le PA 12 et le composant (C) est choisi dans le groupe constitué par les copolymères éthylène-propylène, les copolymères éthylène-1-butène, les copolymères éthylène-propylène-1-butène et leurs mélanges ; ou
le composant (A) est le PA 616, le composant (B) le PA 616 et le composant (C) un copolymère de styrène ou un copolymère séquencé de styrène ; ou
le composant (A) est le PA 616, le composant (B) le PA 1016 et le composant (C) est choisi dans le groupe constitué par les copolymères d'éthylène-propylène, les copolymères d'éthylène-1-butène, les copolymères d'éthylène-propylène-1-butène, et leurs mélanges ; ou
le composant (A) est le PA 1016, le composant (B) le PA 1016 et le composant (C) est choisi dans le groupe constitué par les copolymères éthylène-propylène, les copolymères éthylène-1-butène, les copolymères éthylène-propylène-1-butène et leurs mélanges.

12. Matière à mouler en polyamide selon l'une quelconque des revendications précédentes, **caractérisée en ce que**
les additifs (D) sont choisis dans le groupe constitué par les stabilisants inorganiques et organiques, en particulier les antioxydants, antiozonants, agents anti-UV, en particulier stabilisants UV, absorbeurs UV ou agents antisolaires, lubrifiants, colorants, agents de marquage, pigments, le noir de carbone, graphite, graphène, les nanotubes de carbone, agents photochromiques, antistatiques, agents de démoulage, catalyseurs de condensation, régulateurs de chaîne, agents antimousses, agents antiadhérents, additifs d'allongement de chaîne, azurants optiques, absorbeurs d'infrarouge, absorbeurs d'infrarouge proche, retardateurs de flamme halogénés, retardateurs de flamme non halogénés, modifiants choc non fonctionnalisés, phyllosilicates naturels, phyllosilicates synthétiques, pigments métalliques, paillettes métalliques, particules revêtues de métal, charges particulaires, charges fibreuses, charges à l'échelle nanométrique avec un diamètre de particule (d95) de maximum 100 nm, déterminé par diffraction laser selon la norme ISO 13320 (2009) et leurs mélanges.

13. Matière à mouler en polyamide selon l'une quelconque des revendications précédentes, **caractérisée en ce que**
la matière à mouler en polyamide contient exactement un polyamide comme composant (A) et exactement un polyamide comme composant (B).

14. Matière à mouler en polyamide selon l'une quelconque des revendications précédentes, **caractérisée en ce qu'**une éprouvette fabriquée à partir de la matière à mouler en polyamide
présente un allongement à la rupture déterminé selon la norme ISO 527 d'au moins 200 %, de préférence d'au moins 220 % et de préférence encore d'au moins 250 % ; et/ou
présente un module d'élasticité en traction déterminé selon la norme ISO 527 d'au moins 900 MPa, de préférence d'au moins 1 000 MPa et de préférence encore d'au moins 1100 MPa ; et/ou
présente une résistance au choc Charpy à 23 °C déterminée selon la norme ISO 179/2eA d'au moins 75 kJ/m², de préférence d'au moins 80 kJ/m² et de préférence encore d'au moins 90 kJ/m² ;
présente une résistance au choc Charpy à -40 °C déterminée selon ISO 179/2eA d'au moins 15 kJ/m², de préférence d'au moins 20 kJ/m² et de préférence encore d'au moins 21 kJ/m².

15. Corps moulé pouvant être fabriqué à partir d'une matière à mouler en polyamide selon l'une quelconque des revendications 1 à 14.

16. Corps moulé selon la revendication 15, **caractérisé en ce que**
le corps moulé est choisi dans le groupe constitué par les conduites formées par extrusion, en particulier conduites de refroidissement pour des moteurs ou batteries, conduites de chauffage, de préférence à l'intérieur de bâtiments, conduites de ventilation pour le carter de vilebrequin et conduites d'urée et récipients.
